(19) Europäisches Patentamt

European Patent Office

Office européen des brevets

(11) Veröffentlichungsnummer: **0 232 789 B1**

(12) # EUROPÄISCHE PATENTSCHRIFT

(45) Veröffentlichungstag der Patentschrift: **29.04.92**

(21) Anmeldenummer: **87101061.7**

(22) Anmeldetag: **27.01.87**

(51) Int. Cl.⁵: **G06F 7/548**

(54) **Digitaler Sinusgenerator.**

(30) Priorität: **03.02.86 AT 242/86**

(43) Veröffentlichungstag der Anmeldung:
**19.08.87 Patentblatt 87/34**

(45) Bekanntmachung des Hinweises auf die
Patenterteilung:
**29.04.92 Patentblatt 92/18**

(84) Benannte Vertragsstaaten:
**CH DE GB LI**

(56) Entgegenhaltungen:
**US-A- 3 597 599**

(73) Patentinhaber: **Siemens Aktiengesellschaft
Österreich
Siemensstrasse 88 - 92
A-1210 Wien(AT)**

(72) Erfinder: **Kraker, Alfred
Kollergasse 17
A-1030 Wien(AT)**

(74) Vertreter: **Atzwanger, Richard Dipl.Ing.
Patentanwälte Dipl.-Ing. Anton Atzwanger,
Dipl.-Ing. Richard Atzwanger Mariahilfer
Strasse 1c
A-1060 Wien(AT)**

EP 0 232 789 B1

**Beschreibung**

Gegenstand der Erfindung ist ein digitaler Sinusgenerator für die Ausgabe von fein aufgelösten Digitalsignalen, insbesondere von 16-Bit-Signalen bestehend aus einem ersten Rechner zur Auswahl von Argumentenwerten für einen der Funktionswertbildung dienenden zweiten Rechner.

In Regietischen für Tonstudioanlagen wurde bisher die notwendige Signalverarbeitung an Signalen in analoger Signaldarstellung mit Hilfe analoger Schaltelemente vorgenommen. Im Zuge der Entwicklung zur digitalen Signalverarbeitung ergibt sich auch die Notwendigkeit, Sinussignale auf digitaler Basis zu erzeugen.

Bei einem bekannten digitalen Tongenerator sind zu den Elementen des Definitionsbereiches der Argumentwerte (x) als Adresse die Sinusfunktionswerte (y = sin x) als Daten gespeichert. Hierbei wird durch periodisches Auslesen eine Sinusfolge gebildet. Diese Anordnung hat den Nachteil, daß mit dieser nicht beliebige Tonfrequenzen gebildet werden können, sondern nur solche, die in einem geeigneten Verhältnis zur Abtastfrequenz stehen, können mit diesem Gerät auf einfache Weise erzeugt werden. Andernfalls ergeben sich zeitaufwendige Interpolationsverfahren, die wieder mit Genauigkeitsproblemen behaftet sind.

Andere Lösungen erreichen nicht die zur Darstellung der Digitalsignale für Tonstudiotechnik notwendige 16-Bit-Genauigkeit bzw. erfordern für praktische Anwendungen zu lange Erstellungszeiten der einzelnen Glieder der Digitalsignalfolge.

Demgemäß hat sich die Erfindung die Aufgabe gestellt, einen digitalen Sinusgenerator zu schaffen, der trotz beliebiger Frequenzwahl eine für die 16-Bit-Signalübertragung ausreichende Genauigkeit aufweist. Erfindungsgemäß wird dies dadurch erzielt, daß der erste Rechner mit einer Eingabevorrichtung für die vom Sinusgenerator zu erzeugende Frequenz f verbunden ist, die der Gewinnung eines dieser Frequenz proportionalen Quantisierungsbetrages $q = INT(4f/f_s \cdot 2^{14})$ dient, wobei $f_s$ die Abtastfrequenz beträgt und daß der erste Rechner, ausgehend von einem vorgegebenen Anfangswert $x(0) = INT(2\phi/\pi \cdot 2^{14})$ eine Folge von um den Quantisierungsbetrag differierenden, innerhalb der Grenzwerte $g_1$, $g_2$ eines vorgegebenen Argument-Definitionsbereiches gelegenen, in periodisch aufeinanderfolgenden Abtastabschnitten abwechselnd zu- oder abnehmenden Argumentwerten x(n) liefert, wobei im Falle zweier aufeinanderfolgender, verschiedenen Abtastabschnitten angehörender Argumentwerte der Quantisierungsbetrag die Summe der Differenzen zwischen einem Grenzwert und den beiden genannten Argumentwerten darstellt und bei einem Übergang von zunehmenden zu abnehmenden Argumentwerten mit positiven Vorzeichen sowie bei einem Übergang von abnehmenden zu zunehmenden Argumentwerten mit negativen Vorzeichen anzusetzen ist und daß die ganzzahligen binären, um den Quantisierungsbetrag gestuften Argumentwerte $x(n) = INT((4 f/f_s \cdot n + \frac{2\phi}{\pi}) \cdot 2^{14})$ zwischen dem oberen Grenzwert $g_1 = 2^{14}$ und dem unteren Grenzwert $g_2 = -2^{14}$ definiert sind und daß eine Gewinnung der Sinus-Funktionswerte $y(n) = (\sin(2\pi(f/f_s) \cdot n + \phi)) \cdot 2^{14}$ auf der Basis der folgenden iterierten Polynombildung vorgesehen ist:

$$\begin{aligned}
y_0 &= -142 \\
y_1 &= u_1 \cdot y_0 \cdot 2^{-14} + 2603 \\
y_2 &= u_1 \cdot y_1 \cdot 2^{-14} - 21165 \\
y_3 &= y_2 \cdot 2^{-1} \\
y_4 &= u_1 \cdot y_3 \cdot 2^{-14} + 25736 \\
y(n) &= y_5 = u_2 \cdot y_4 \cdot 2^{-14},
\end{aligned}$$

wobei die Ausdrücke $u_1 = INT(x^2 \cdot 2^{-14}) = INT(x(n)^2 \cdot 2^{-14})$ und $u_2 = INT(x) = INT(x(n))$ betragen. Mit "INT" ist das größte Ganze des Argumentes bezeichnet.

Ein Ausführungsbeispiel der Erfindung ist in Fig. 1 der Zeichnung dargestellt. Die Fig. 2 und 3 zeigen Diagramme zur Verdeutlichung der bei der Signalverarbeitung auftretenden Vorgänge.

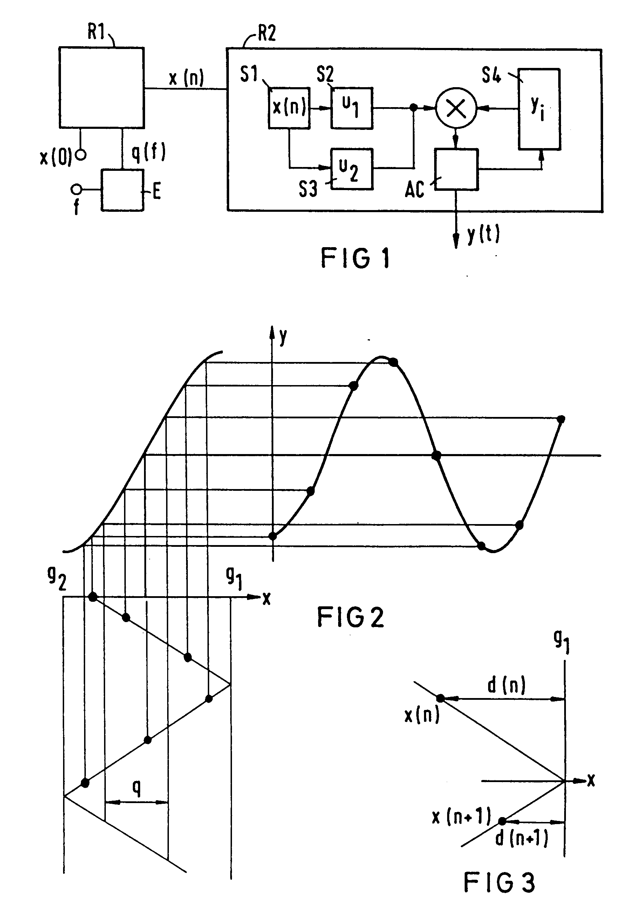

Die beiden Rechner, von denen der erste zur Auswahl der Argumentwerte und der zweite zur Funktionswertbildung herangezogen ist, sind in Fig. 1 mit 1 und R2 bezeichnet. Diese Rechner müssen nicht als getrennte Einheiten aufgebaut sein, sondern können auch zwei Rechenwerke eines einzigen Rechners sein. Es ist aber auch möglich, die von den Rechnern R1 und R2 zu besorgenden Rechenvorgänge von einem einzigen Rechner in gestaffelten Rechenabschnitten durchführen zu lassen. Für die Zwecke der Beschreibung ist jedoch die Darstellung mit zwei getrennten Rechnern am zweckmäßigsten.

Der erfindungsgemäße Sinusgenerator liefert zu vorgegebenen aequidistanten Zeitpunkten, die im Beispiel durch einen Zählparameter n charakterisiert sind, die diesen Zeitpunkten zugeordneten Sinuswerte y (n(t)) = sin ft in Form von 16-Bit Digitalsignalen an einen entsprechend ausgestatteten Datenbus. Aus diesen Digitalsignalen werden nach einer Digital-Analog-Umsetzung durch Rekonstruktion mittels eines Tiefpaßfilters die gewünschten Analogsignale gewonnen. Hierbei werden die y-Werte aus entsprechend ausgewählten x-Werten in jeweils neu durchgeführten Rechengängen gewonnen, wobei die Argumentwerte x(n) vom Rechner R1 ausgewählt und dem Rechner R2 zugeführt werden, der dann die Berechnung der Funktionswerte y(x(n)) durchführt.

Da die Berechnung der Sinuswerte sin ft mit ständig wachsendem Zeitparameter t immer umständlicher wird, obwohl das Ergebnis stets gleiche periodische Werte aufweist, werden erfindungsgemäß die Argumentwerte x(n) in periodisch aufeinanderfolgenden Abtastabschnitten geliefert so daß vom Rechner R2 nur die Sinuswerte der ersten Halbperiode, also wie in Fig. 2 dargestellt, zwischen den Grenzen - 90° und + 90° (im Winkelmaß dargestellt) errechnet werden müssen.

Da der Sinusgenerator nahezu stufenlos Sinuswerte sin ft aller Frequenzen f liefert, die Abtastzeitpunkte jedoch von vornherein festgelegt sind, ergeben sich für die verschiedenen Frequenzen f auch unterschiedliche Distanzen zwischen den Argumentwerten x(n). Diese Distanzen werden rechnungsmäßig durch einen frequenzabhängigen Quantisierungsbetrag $q = INT (4f/f_s . 2^{14} = x(n+1) - x(n)$, wenn sich die Argumentwerte x(n+1) und x(n) innerhalb eines und desselben Abtastabschnittes liegen.

Zufolge der Periodizität jener Zickzackfunktion, der die Folge der Argumentwerte x(n) angehört, ist der Quantisierungsbetrag q je nach Abtastabschnitt einmal positiv und einmal negativ einzusetzen. An der Grenze zwischen zwei Abtastabschnitten ist jedoch, wie in Fig. 3, in einem gegenüber Fig. 2 vergrößerten Maßstab dargestellt, die Summe (d(n) + d(n+1) der Differenzen zwischen dem Grenzwert $g_1$ des Definitionsbereiches der Argumentwerte x (entsprechend dem Winkelmaß von 90°) und den beiden Argumentwerten x(n) und x(n+1), also d(n) = $g_1$ - x(n) und d(n+1) = $g_1$ - x(n+1), gleich dem Quantisierungsbetrag q = d(n) + d(n+1). Mit der Einhaltung dieser Bedingung ist die Kontinuität der Aufeinanderfolge der aus den Argumentwerten x(n) zu bildenden Funktionswerte y(x(n)) gewährleistet. Um die vom Sinusgenerator zu erzeugende Sinusfunktion auch phasengerecht zu erhalten, ist für die Folge der Argumentwerte x(n) ein Anfangswert x(0) einstellbar, der in den Rechner R1 eingebbar ist. Für die Eingabe des jeweils gewünschten Frequenzwertes ist eine Eingabevorrichtung E vorgesehen.

Die angestrebte hohe digitale Auflösung der die Sinusfunktion darstellenden Digitalsignale bei minimalem Rechenaufwand wird erfindungsgemäß einerseits durch eine entsprechende Quantisierung der Argumentwerte x(n) und anderseits durch eine angepaßte Ausrechnung der Funktionswerte y(x(n)) mittels einer auf der Basis von Polynomen erstellten Annäherung. Hierzu werden die folgenden Regeln eingehalten:

Den aufgrund der gewählten Frequenz f und der vorgegebenen Abtastfrequenz $f_s$ sowie des gewählten Anfangswertes x(0) ermittelten Argumentwerten x(n) = $INT((4f/f_s + x(0)) . 2^{14})$, die zwischen dem oberen Grenzwert $g_1 = 2^{14}$ und dem unteren Grenzwert $g_2 = -2^{14}$ definiert sind, werden die Sinus-Funktionswerte y(n) = sin(x(n)) zugeordnet, die auf der Basis der folgenden iterierten Polynombildung erstellt werden:

Unter Verwendung der Hilfswerte $u_1 = INT (x^2 . 2^{-14})$ und $u_2 = INT (x)$ werden in aufeinanderfolgenden Rechenschritten die folgenden Polynome $y_1 ... y_5$ gebildet, deren letztes $y_5 = y(n)$ gleich dem gesuchten Ausgangswert ist:

$$v_0 = -142$$
$$y_1 = u_1 \cdot y_0 \cdot 2^{-14} + 2603$$
$$y_2 = u_1 \cdot y_1 \cdot 2^{-14} - 21165$$
$$y_3 = y_2 \cdot 2^{-1}$$
$$y_4 = u_1 \cdot y_3 \cdot 2^{-14} + 25736$$
$$y(n) = y_5 = u_2 \cdot y_4 \cdot 2^{-14} .$$

Diese Operationen werden vom Rechner R2, der die in Fig. 1 angedeutete Grundstruktur aufweist, durchgeführt. Hierbei werden in einem Speicher S1 die Argumentwerte x(n) eingegeben und daraus die in den Speichern S2 und S3 enthaltenen Werte $u_1$ bzw. $u_2$ ermittelt. Mit S4 ist ein die Konstanten sowie die Polynome $y_1$ bis $y_4$ speicherndes Register bezeichnet, aus dem die Polynome nacheinander zwecks Multiplikation mit den Werten $u_1$ bzw. $u_2$ abgerufen werden, wonach sie in einem Zwischenspeicher AC bis zur Errechnung des Polnoms $y_5$ zwischengespeichert werden.

Der erfindungsgemäße Sinusgenerator ist nicht nur für die Erzeugung von 16-Bit-Digitalsignalen optimal geeignet, sondern selbstverständlich auch für solche mit geringerer Auflösung. Es ist aber auch möglich, mit der gleichen Einrichtung bei noch weiter unterteilten x- und y-Skalen bei gleichartig strukturierten, sich eventuell um ganzzahlige Vielfache von 2 unterscheidenden Polynomen höher aufgelöste Ausgangswerte zu erzielen.

**Patentansprüche**

1. Digitaler Sinusgenerator für die Ausgabe von fein aufgelösten Digitalsignalen, insbesondere von 16-Bit-Signalen, bestehend aus einem ersten Rechner zur Auswahl von Argumentwerten sowie einem der Funktionswertbildung aus den ihm zugeführten Argumentwerten dienenden zweiten Rechner,
**dadurch gekennzeichnet,** daß der erste Rechner (R1) mit einer Eingabevorrichtung (E) für die vom Sinusgenerator zu erzeugende Frequenz f verbunden ist, die der Gewinnung eines dieser Frequenz proportionalen Quantisierungsbetrages $q = INT (4f/f_s\ 2^{14})$dient, wobei $f_s$ die Abtastfrequenz beträgt und daß der erste Rechner (R1), ausgehend von einem vorgegebenen Anfangswert $x(0) = INT (2\phi/\pi\ 2^{14})$- eine Folge von um den Quantisierungsbetrag differierenden, innerhalb der Grenzwerte $g_1$, $g_2$ eines vorgegebenen Argument-Definitionsbereiches gelegenen, in periodisch aufeinanderfolgenden Abtastabschnitten abwechselnd zu- oder abnehmenden Argumentwerten x(n) liefert, wobei im Falle zweier aufeinanderfolgender, verschiedenen Abtastabschnitten angehörender Argumentwerte x(n),x(n+1) der Quantisierungsbetrag die Summe d(n)+d(n+1) der Differenzen z.B. $d(n) = g_1 - x(n)$, $d(n+1) = g_1 - x-(n+1)$ zwischen einem Grenzwert und den beiden genannten Argumentwerten darstellt und bei einem Übergang von zunehmenden zu abnehmenden Argumentwerten mit positivem Vorzeichen sowie bei einem Übergang von abnehmenden zu zunehmenden Argumentwerten mit negativem Vorzeichen anzusetzen ist, und daß die ganzzahligen binären, um den Quantisierungsbetrag gestuften Argumentwerte $x(n) = INT((4f/f_s.n + \frac{2\phi}{\pi})\ 2^{14})$zwischen dem oberen Grenzwert $g_1 = 2^{14}$ und dem unteren Grenzwert $g_2 = -2^{14}$ definiert sind und daß eine Gewinnung der Sinus-Funktionswerte $y(n) = (\sin(2\pi-(f/f_s)\ .n + \phi))\ 2^{14}$ auf der Basis der folgenden iterierten Polynombildung vorgesehen ist:

$$
\begin{aligned}
y_0 &= -142 \\
y_1 &= u_1 \cdot y_0 \cdot 2^{-14} + 2603 \\
y_2 &= u_1 \cdot y_1 \cdot 2^{-14} - 21165 \\
y_3 &= y_2 \cdot 2^{-1} \\
y_4 &= u_1 \cdot y_3 \cdot 2^{-14} + 25736 \\
y(n) = y_5 &= u_2 \cdot y_4 \cdot 2^{-14},
\end{aligned}
$$

wobei die Ausdrücke $u_1 = INT (x^2\ 2^{-14}) = INT(x(n)^2\ 2^{-14})$ und $u_2 = INT (x) = INT (x(n))$ betragen, und INT das größte Ganze der nachkommenden Werten bezeichnet.

**Claims**

1. Digital sine-wave generator for the output of finely resolved digital signals, in particular of 16-bit signals, consisting of a first computer for the selection of argument values as well as a second computer serving the formation of function values from the argument values supplied to it, characterized in that the first computer (R1) is connected to an input device (E) for the frequency f to be produced by the sine-wave generator, which allows a quantization amount $q = INT ((4f/f_s).2^{14})$ to be obtained proportional to this frequency, wherein $f_s$ amounts to the sampling frequency and in that the first computer

4

(R1), starting out from a specified initial value $x(0) = \mathrm{INT}\ ((2\ \phi/\pi).2^{14})$, supplies a sequence of argument values $x(n)$, differing by the quantization amount, lying within the limiting values $g_1$, $g_2$ of a specified argument definition region, increasing or decreasing alternately in periodically successive sampling sections, whereby in the case of two successive argument values $x(n),x(n+1)$ belonging to different sampling sections, the quantization amount represents the sum $d(n)+d(n+1)$ of the differences, for example $d(n) = g_1 - x(n)$, $d(n+1) = g_1 - x(n+1)$, between a limiting value and the two named argument values and is to be applied with a transition from increasing to decreasing argument values with positive sign as well as with a transition from decreasing to increasing argument values with negative sign, and in that the integral binary argument values ranged about the quantization amount $x(n) = \mathrm{INT}((4f/f_s).n + (2\phi/\pi).2^{14})$ are defined between the upper limiting value $g_1 = 2^{14}$ and the lower limiting value $g_2 = -2^{14}$ and in that obtaining the sine-wave function values $y(n) = (\sin(2\ \pi(f/f_s)\ .n + \phi))\ 2^{14}$ is provided on the basis of the following iterated polynomial formation:

$$
\begin{aligned}
y_0 &= -142 \\
y_1 &= u_1 \cdot y_0 \cdot 2^{-14} + 2603 \\
y_2 &= u_1 \cdot y_1 \cdot 2^{-14} - 21165 \\
y_3 &= y_2 \cdot 2^{-1} \\
y_4 &= u_1 \cdot y_3 \cdot 2^{-14} + 25736 \\
y(n) = y_5 &= u_2 \cdot y_4 \cdot 2^{-14},
\end{aligned}
$$

whereby the expressions amount to $u_1 = \mathrm{INT}\ (x^2\ 2^{-14}) = \mathrm{INT}\ (x(n)^2\ 2^{-14})$ and $u_2 = \mathrm{INT}\ (x) = \mathrm{INT}\ (x(n))$, and INT denotes the largest integer value of the following value.

**Revendications**

1. Générateur numérique de sinus servant à délivrer des signaux numériques à résolution fine, notamment des signaux à 16 bits, constitué par un premier calculateur servant à sélectionner des valeurs d'arguments ainsi qu'un second calculateur servant à former la valeur de la fonction à partir des valeurs d'arguments, qui lui sont envoyées, caractérisé par le fait que le premier calculateur (R1) est raccordé à un dispositif d'entrée (E) pour la fréquence f devant être produite par le générateur de sinus, et qui sert à obtenir une valeur de quantification $q = \mathrm{INT}\ ((4f/f_s).2^{14})$ proportionnelle à cette fréquence, $f_s$ étant égale à la fréquence d'échantillonnage, qu'à partir d'une valeur initiale prédéterminée $x(0) = \mathrm{INT}\ ((2\phi/\pi).2^{14})$, le premier calculateur (R1) délivre une suite de valeurs d'arguments $x(n)$ qui diffèrent de la valeur de quantification, sont situées entre les valeurs limites $g_1,g_2$ d'une gamme prédéterminée de définition d'arguments et augmentent ou diminuent alternativement pendant des intervalles d'échantillonnage se succédant périodiquement, auquel cas, en présence de deux valeurs successives d'arguments $x(n)$, $x(n+1)$, qui appartiennent à différents intervalles d'échantillonnage, la valeur de quantification représente la somme $d(n) + d(n+1)$ des différences, par exemple $d(n) = g_1 - x(n)$, $d(n+1) = g_1 - x(n+1)$ entre une valeur limite et lesdites deux valeurs d'arguments, et doit être considérée avec un signe positif dans le cas du passage d'une valeur d'argument croissante à une valeur décroissante et doit être considérée avec un signe négatif dans le cas du passage d'une valeur d'argument décroissante à une valeur croissante, et que les valeurs binaires d'arguments formées de nombres entiers et échelonnées conformément à la valeur de quantification, $x(n) = \mathrm{INT}\ ((4f/f_s).n + \frac{2\phi}{\pi}\ 2^{14})$ sont définies entre la valeur limite $g_1 = 2^{14}$ et la valeur limite inférieure $g_2 = -2^{14}$, et que l'obtention des valeurs de la fonction sinus $y(n) = (\sin(2\pi(f/f_s).n + \phi)2^{14}$ est prévue sur la base de la formation itérative suivante de polynômes :

$y_0 = -142$

$y_s = u_1 - y_0 \cdot 2^{-14} + 2603$

$y_2 = u_1 \cdot y_1 \cdot 2^{-14} - 21165$

$y_3 = y_2 \cdot 2^{-1}$

$y_4 = u_1 \cdot y_3 \cdot 2^{-14} + 25736$

$y(n) = y_5 = u_2 \cdot y_4 \cdot 2^{-14}$,

avec les expressions $u_1 = \mathrm{INT}\ (x^2\ 2^{-14}) = \mathrm{INT}\ (x(n)^2\ 2^{-14})$ et $u_2 = \mathrm{INT}\ (x) = \mathrm{INT}\ (x(n))$, INT représentant le plus grand entier de la valeur suivante.

FIG 1

FIG 2

FIG 3